(19) Europäisches Patentamt
European Patent Office
Office européen des brevets

(11) Numéro de publication: **0 004 224**
**B1**

(12) **FASCICULE DE BREVET EUROPEEN**

(45) Date de publication du fascicule de brevet: **02.09.81**

(21) Numéro de dépôt: **79400118.0**

(22) Date de dépôt: **27.02.79**

(51) Int. Cl.³: **C 07 C 118/06,**
**C 07 C 119/048,**
**B 01 J 31/18**

(54) **Procédé de préparation des isocyanates organiques à partir des dérivés nitrés.**

(30) Priorité: **10.03.78 FR 7806927**

(43) Date de publication de la demande:
**19.09.79 Bulletin 79/19**

(45) Mention de la délivrance du brevet:
**02.09.81 Bulletin 81/35**

(84) Etats Contractants Désignés:
**BE CH DE FR GB IT LU NL SE**

(56) Documents cités:
**FR - A - 2 014 174**
**FR - A - 2 032 277**
**FR - A - 2 155 242**
**US - A - 2 966 453**
**US - A - 4 070 307**
**US - A - 4 072 630**

(73) Titulaire: **P C U K PRODUITS CHIMIQUES UGINE KUHLMANN**
**Service Propriété Industrielle Tour Manhattan**
**F-92087 PARIS LA DEFENSE 2 Cédex 21 (FR)**

(72) Inventeur: **Cognion, Jean-Marie**
**85, Route de Charly**
**F-69230 St Genis Laval (FR)**
Inventeur: **Kervennal, Jacques**
**134, rue Docteur Locard**
**F-69005 Lyon (FR)**

(74) Mandataire: **Houssin, Jean Produits Chimiques Ugine Kuhlmann et al,**
**Service Propriété Industrielle Tour Manhattan**
**Cedex 21**
**F-92087 Paris la Defense (FR)**

**EP 0 004 224 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Procédé de préparation des isocyanates organiques à partir des dérivés nitrés

La présente invention concerne un procédé de synthèse des isocyanates organiques à partir des composés nitrés et plus particulièrement un procédé de préparation en phase liquide des isocyanates aromatiques par réaction entre les dérivés nitrés aromatiques et le monoxyde de carbone en présence de nouveaux catalyseurs consitués par les complexes métalliques des porphyrines.

Les isocyanates aromatiques sont des intermédiaires organiques de grand intérêt. Deux d'entre eux sont particulièrement importants industriellement. Il s'agit du toluène diisocyanate-2,4 et du diphénylméthane diisocyanate-4,4' qui sont utilisés dans la synthèse des polyuréthanes. Les procédés industriels pour la préparation de ces produits font tous intervenir la réaction de phosgénation d'une amine provenant de l'hydrogénation catalytique d'un dérivé nitré. Les inconvénients de ces procédés sont multiples: ils nécessitent la synthèse et la manipulation de phosgène, produit très dangereux; ils produisent de l'acide chlorhydrique en quantités importantes ce qui exige l'implantation et l'entretien coûteux d'un atelier particulier pour l'électrolyse de cet acide afin de recycler le chlore.

L'intérêt que présenterait un procédé évitant l'utilisation du phosgéne est évident et plusieurs brevets revendiquent des compositions catalytiques permettant de réaliser, à température et pression élevées, la synthèse d'isocyanates par réaction d'un composés organique nitré avec l'oxyde de carbone. C'est ainsi que le brevet français N° 1.600.529 déposé le 11 Décembre 1968, décrit l'utilisation comme catalyseur d'un halogénure de métal noble en présence d'une base aminée à caractère aromatique; le brevet allemand N° 1.910.303 déposé le 28 Février 1969 revendique des catalyseurs formés d'halogénures ou d'oxydes de Ru, Rh, Pd, Os, Ir, Pt, et d'un composé soufré hétéroaromatique en présence éventuellement d'un oxyde de Cr, Mo, Nb, W, V; le brevet français N° 1.567.321 déposé le 5 Avril 1968 décrit l'utilisation d'un système catalytique formé d'un halogénure de métal noble et d'un composé organique du phosphore, par exemple une triarylphosphine ou un phosphite. Le brevet français N° 72.30141 (2.155.242), déposé le 24 Août 1972, revendique des systèmes catalytiques constitués d'un ou plusieurs halogénures de palladium et/ou de rhodium, d'une ou plusieurs base azotées hétéroatomiques et d'un co-catalyseur formé d'un ou plusieurs borates de fer; dans le brevet français N° 71.47284, (2.120.110), la formulation catalytique comprend outre un halogénure de palladium et des bases azotées hétéroatomiques, un co-catalyseur constitué d'un du plusieurs molybdates de fer et/ou de manganèse. Tous ces systèmes produisent des isocyanates à partir de composés nitrés avec des sélectivités et des productivités variables.

La demanderesse a découvert que la réaction de réduction directe des dérivés nitrés aromatiques en isocyanates par le monoxyde de carbone s'effectuait avec de bons rendements à l'aide de nouveaux catalyseurs constitués par des complexes métalliques des porphyrines. Ces complexes ont une bonne stabilité chimique et thermique et ne conduisent pas, comme la majorité des systèmes catalyseurs décrits jusqu'à présent, à la formation de dérivés azo.

Selon l'invention, les composés nitrés sont mis en contact avec de l'oxyde de carbone à température et pression élevées en présence d'une ou plusieurs porphyrines métalliques. Il est possible d'opérer en présence d'un solvant organique, par une technique discontinue dans un appareillage du type autoclave ou par une technique continue qui permet d'éliminer dès sa formation l'isocyanate produit. L'équation de la réaction peut s'écrire selon le schéma cidessous:

$$R—NO_2+3\ CO \longrightarrow R—NCO+2\ CO_2$$

Le procédé selon l'invention est applicable aux comppsés aromatiques comportant un ou plusieurs groupements nitrées fixés sur un atome de carbone d'un noyau aromatique, ces composés pouvant être représentés par la formule générale:

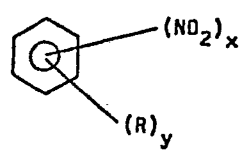

dans laquelle x=1 ou 2 et y=0, 1, 2 et 3, R étant un groupement d'atomes ou un atome fixé sur le noyau aromatique et pouvant représenter un groupement alkyle ayant de 1 à 10 atomes de carbone, un atome d'halogène, chlore ou brome par exemple, ou un groupement aikoxy OR' dans lequel R' est un radical alkyle ayant de 1 à 10 atomes de carbone. Des exemples, non limitatifs, de composés aromatiques à une ou plusieurs fonctions nitrées, utilisables selon l'invention, sont le nitrobenzène, l'orthonitrotoluène, le paranitrotoluène, le dinitro-1,2 benzène, le dinitro-1,3 benzène, le dinitro-1,4 benzène, le trinitro-1,2,4 benzène, le trinitro-1,3,5 benzène, le dinitro-2,4 toluène, le dinitro-2,6 toluène, le méthoxy-1 dinitro-2,4 benzène, le chloro-1 nitro-2 benzène, le chloro-1 dinitro-2,4 benzène.

Les porphyrines métalliques employées comme catalyseurs sont obtenues en faisant réagir un sel ou un complexe métallique sur un ligand porphyrine préablement préparé, suivant

les modes de synthèse cités et décrits dans l'ouvrage de K. M. SMITH, Porphyrins and Metalloporphyrins, Elsevier (1975). Les porphyrines utilisables pour catalyser la réaction peuvent porter éventuellement différents substituants sur le cycle carboné, par exemple, des atomes d'halogène, des groupes alkyle, aryle, alkoxy, chlorure d'acide, amide, acétyl, nitrile; cependant on utilise préférentiellement la tétraphénylporphyrine et l'octaéthylporphyrine. Le brevet USA 2 966 453 décrit l'emploi d'une métalloporphyrine comme catalyseur; la réaction à laquelle elle participe est une réaction d'oxydation. Dans la présente invention il s'agit d'une réduction.

Les métaux qui conviennent particulièrement pour l'invention sont les métaux des groupes VIII et $I_B$ de la classification périodique des éléments et notamment les suivants: fer, cobalt, nickel, ruthénium, rhodium, palladium, iridium, cuivre, argent.

La concentration du catalyseur exprimée par le rapport entre le nombre d'atomes grammes du métal et le nombre de groupements nitro à transformer peut varier entre $10^{-4}$ et 1 et préférentiellement entre $5.10^{-3}$ et $10^{-1}$.

La réaction peut être conduite en l'absence de solvant, mais la présence d'un solvant chimiquement inerte dans la réaction favorise généralement la sélectiveité en isocyanate. Les solvants utilisés de préférence sont les hydrocarbures saturés ou aromatiques tels que l'hexane, l'heptane, le benzène, le toluène ou le xylène et des halogénures aromatiques tels que le chlorobenzène et les dichlorobenzènes. La proportion de solvant n'est pas critique, mais on opère en général avec des solutions contenant 5 à 50% en poids du dérivé nitré dans le solvant.

Les métallo-porphyrines peuvent être utilisées en tant que telles comme catalyseurs, mais elles peuvent également être déposées sur un support pour disperser le catalyseur et faciliter sa récupération. Parmi les supports possibles, on peut citer les silices, les alumines, les silice-alumines, les charbons actifs, la magnésie, la zircone, le carbure de silicium.

Les températures de réaction sont comprises entre 100° et 500°C et plus particulièrement entre 150° et 300°C suivant la nature et la stabilité des réactifs mis en jeu dans les conditions opératoires.

Les pressions de réactions sont comprises entre 20 et 500 bars, de préférence entre 150 et 350 bars, et doivent être suffisantes pour maintenir en phase liquide une fraction importante des réactifs et introduire une quantité totale d'oxyde de carbon correspondant à un rapport molaire

$$\frac{CO}{\text{groupement } NO_2}$$

généralement compris entre 3 et 100 et de préférence entre 10 et 65.

Les essais décrits dans les exemples ci-dessous ont été réalisés en discontinu dans un autoclave en acier inoxydable de 500 ml, muni d'un dispositif d'agitation magnétique, pouvant opérer sous des pressions allant jusqu'à 500 bars et des températures de 300°C. Le réacteur, chargé avec les différents réactifs en solution est ensuite balayé à l'azote avant d'être mis sous pression d'oxyde de carbone à température ordinaire. L'autoclave, isolé, est alors chauffé à la température choisie et l'avancement de la réaction est contrôlé par enregistrement de la pression. Les premiers essais ont été effectués sur des dérivés aromatiques mononitrés. Après réaction, les teneurs en isocyanates ont été évaluées par dosage chimique à la dibutylamine et celles en dérivés nitrés résiduaires et éventuellement en dérivés azo par chromatographie en phase gazeuse.

Dans les exemples suivants, donnés à titre non limitatif, les résultats indiqués s'entendent pour les définitions suivantes:

T.T.G., le taux de transformation globale =

$$\frac{\text{Nombre de moles de dérivé nitré transformé}}{\text{Nombre de moles de dérivé nitré introduit}} \times 100$$

Sélectivité en isocyanate =

$$\frac{\text{Nombre de moles d'isocyanate formé}}{\text{Nombre de moles de dérivé nitré transformé}} \times 100$$

Rendement en isocyanate =

$$\frac{\text{Nombre de moles d'isocyanate formé}}{\text{Nombre de moles de dérivé nitré introduit}} \times 100$$

Exemple 1

On prépare de la tétraphénylporphyrine de palladium suivant le mode opératoire décrit par D. W. THOMAS et A. E. MARTELL, J. Amer. Chem. Soc., vol. 81, p. 5111 (1959). On place 10 g de tétraphénylporphyrine purifiée et 7,7 g de chlorure de palladium dans 385 ml d'acide acétique. On porte à reflux pendant dix minutes puis ajoute 23 grammes d'acétate de sodium, laisse à reflux pendant une heure et ajoute à nouveau 23 grammes d'acétate de sodium. Après 2 heures supplémentaires de reflux, on laisse refroidir le mélange et le verse dans 800 ml d'eau. On recueille le précipité par filtration, lave à l'eau et après séchage on récupière 12,3 g du complexe de Pd de couleur brun-foncé.

L'analyse chimique indique une teneur en palladium de 14,8% et une teneur en chlore inférieure à 0,5%. On charge dans l'autoclave précédamment décrit 2,0 g de porphyrine de palladium, 30 g de nitrobenzène et complète le volume total à 100 ml avec de l'orthodichlorobenzène. On fait passer un courant d'azote à la pression atmosphérique puis comprime de l'oxyde de carbone jusqu'à ce que la pression atteigne 200 bars à 20°C. On isole l'autoclave et le chauffe à 230°C, ce qui amène la pression à 340 bars. On laisse réagir pendant 7 heures tout en maintenant une agitation, puis laisse refroidir et analyse le mélange. Le taux de transformation globale du nitrobenzène est de 25,4% et la sélectivité en phénylisocyanate de 94,8%. Il n'y a pas de formation d'azobenzène.

Exemple 2

Dans l'autoclave précédemment décrit, on introduit 2 g de tétraphénylporphyrine de palladium, 30 g de nitrobenzène et ajuste à 100 ml le volume total à l'aide d'orthodichlorobenzène. On ferme le réacteur et après balayage à l'azote, introduit de l'oxyde de carbone jusqu'à ce que la pression atteigne 200 bars à 20°C. On isole l'autoclave et en maintenant une agitation on chauffe à 235°C pendant 3 heures puis à 240°C pendant 4 h 30. Après refoidissement, on analyse le mélange. Le T.T.G. du nitrobenzène est de 94,7% et la sélectivité en phénylisocyanate de 60,2%. La formation d'azobenzène est nulle.

Exemple 3

On introduit dans l'autoclave, 1,4 g tétraphénylporphyrine de palladium. On ajoute 20 g de nitrobenzène et amène à 200 ml le volume total à l'aide d'orthodichlorobenzène. On balaye à l'azote et introduit de l'oxyde de carbone jusqu'à une pression de 200 bars à 20°C. On isole l'autoclave, et en maintenant une agitation, on le chauffe à 240°C pendant 4 heures puis à 250°C pendant 4 heures. Après refroidissement, l'analyse montre que le T.T.G. du nitrobenzène est de 100% et la sélectivité en phénylisocyanate de 69,3%. Il n'y a pas de trace d'azobenzène.

Exemple 4

On place dans l'autoclave 0,7 g de tétraphénylporphyrine de palladium, 10 g de nitrobenzène et complète le volume total à 100 ml par de l'orthodichlorobenzène. On ferme l'autoclave et après balayage à l'azote, introduit de l'oxyde de carbone jusqu'à ce que la pression atteigne 200 bars à 20°C. Après avoir isolé le réacteur et mis en marche l'agitation, on le chauffe à 250°C pendant 1 heure puis à 243°C pendant une autre heure. Après refroidissement, l'analyse indique que le T.T.G. du nitrobenzène est de 100% et la sélectivité en phénylisocyanate de 69,3%. La formation d'azobenzène est nulle.

Exemple 5

On introduit dans l'autoclave 0,7 g de tétraphénylporphyrine de palladium, 10 g de nitrobenzène et complète le volume total à 100 ml par de l'orthodichlorobenzène. On balaye à l'azote puis introduit de l'oxyde de carbone jusqu'à ce que le manomètre indique une pression de 200 bars à température ordinaire. On isole l'autoclave, met en marche l'agitation et chauffe à 240°C pendant 2 heures et à 235°C pendant 1 heure supplémentaire. Après refroidissement, on analyse le mélange. Pour un T.T.G. de 100% de nitrobenzène, la sélectivité en phénylisocyanate est de 81,2%. Il n'y a pas de trace d'azobenzène.

Exemple 6

On place dans l'autoclave 0,7 g de tétraphénylporphyrine de palladium, 10 g d'orthonitrotoluène et complète le volume total à 100 ml par de l'orthodichlorobenzène. Après avoir balayé à l'azote on introduit de l'oxyde de carbone jusqu'à ce que la pression atteigne 200 bars à 20°C. On isole l'autoclave, met en marche l'agitation et chauffe à 240°C pendant 3 heures, puis à 245°C pendant 2 h 30 et enfin à 250°C pendant 2 heures. Après refroidissement, l'analyse indique que la T.T.G. de l'orthonitrotoluène est de 17,5% et la sélectivité en orthotoluène isocyanate de 55%.

Exemple 7

On prépare de la tétraphénylporphyrine de palladium suivant le mode opératoire décrit par A. D. ADLER, F. R. LONGO, F. LAMPAS et J. KIM dans J. Inorg. Nucl. Chem. vol. 32, p. 2443 (1970). A 300 ml de diméthylformamide à reflux on ajoute 3 g de tétraphénylporphyrine. Après dissolution de celle-ci on ajoute 0,9 g de chlorure de palladium. On laisse le reflux se poursuivre pendant dix minutes, puis on refroidit le mélange dans un bain de glace et le verse dans 300 ml d'eau distillée. On filtre le précipité formé, lave à l'eau et sèche.

L'analyse chimique indique une teneur en palladium de 14,3% et une teneur en chlore de 2,4%. On introduit dans l'autoclave une solution de 100 ml contenant 10 g de nitrobenzène, 0,7

g de porphyrine de palladium, le complément étant de l'orthodichlorobenzène. On fait passer un courant d'azote à la pression atmosphérique puis comprime du monoxyde de carbone jusqu'à ce que la pression atteigne 200 bars à 20°C. On isole l'autoclave et le chauffe à 240°C pendant trois heures, tout en maintenant une agitation, puis on laisse refoidir et analyse le mélange. Le T.T.G. du nitrobenzène est de 100% et la sélectivité en phénylisocyanate de 60,2%. Il n'y a pas de formation d'azobenzène.

Exemple 8

On prépare de la tétraphénylporphyrine de fer suivant le mode opératoire utilisé dans l'exemple 7. Dans 200 ml de diméthylformamide à reflux, on fait dissoudre 2 g de tétraphénylporphyrine, puis on ajoute 1,6 g de $FeCl_2$, $4H_2O$. On laisse le reflux se poursuivre pendant vingt minutes, puis on refroidit le mélange dans un bain de glace et précipite le complexe en additionnant 200 ml d'eau désoxygénée. On filtre sous azote, lave à l'eau et sèche sous vide.

On récupère 2,3 g de complexe dont on conserve une moitié sous vide et l'autre simplement au dessicateur. Dans l'autoclave précédemment décrit, on introduit, 0,7 g de tétraphénylporphyrine de fer conservée sous vide, 10 g de nitrobenzène et complète à 100 ml le volume total à l'aide d'orthodichlorobenzène. On ferme l'autoclave et après balayage à l'azote, introduit du monoxyde de carbone jusqu'à ce que la pression atteigne 200 bars à 20°C. Après avoir isolé le réacteur et mis en marche l'agitation, on le chauffe à 240°C pendant 6 h 30. Après refroidissement, on analyse le mélange. Le T.T.G. du nitrobenzène est de 88,1% et la sélectivité en phénylisocyanate de 80,6%. Il n'y a pas de formation d'azobenzène.

Exemple 9

On introduit dans l'autoclave 10 g de nitrobenzène, 0,7 g de tétraphénylporphyrine de fer conservée à l'air dont la synthèse à été décrite dans l'exemple 8 et complète le volume à 100 ml à l'aide d'orthodichlorobenzène. Après avoir opéré de la même façon que dans l'exemple 8, l'analyse montre que le T.T.G. du nitrobenzène est de 92,2%, la sélectivité en phénylisocyanate étant de 59,7%. Il n'y a pas d'azobenzène.

**Revendications**

1. Procédé de synthèse des isocyanates aromatiques par réaction des dérivés nitrés aromatiques avec le monoxyde de carbone caractérisé en ce que la réaction est conduiteen présence d'un catalyseur constitué par un ou plusieurs complexes métalliques de porphyrines dont les métaux appartiennent au groupe VIII et/ou $I_B$ de la classification périodique des éléments.

2. Procédé selon la revendication 1 caractérisé en ce que la ou les porphyrines sont substituées par une ou plusieurs groupes alkyle, aryle, alkoxy, acétyle, nitrile, amide, chlorure d'acide ou par un ou plusieurs atomes d'halogène.

3. Procédé selon les revendications 1 à 2 caractérisé en ce que le catalyseur est la tétraphénylporphyrine de palladium.

4. Procédé selon les revendications 1 à 2 caractéisé en ce que le catalyseur est une association d'une porphyrine d'un métal du groupe $I_B$ et d'une porphyrine d'un métal du groupe VIII de la classification périodique.

5. Procédé selon l'une des revendications précédentes caractérisé en ce que le catalyseur est déposé sur un support comme les alumines, les silices, les silice-alumines, les charbons actifs, la magnésie, la zircone, le carbure de silicium.

6. Procédé selon la revendication 1 caractérisé en ce que le dérivé nitré aromatique répond à la formula générale:

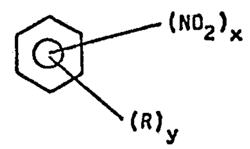

où x=1 ou 2, y=0, 1, 2, 3 et R réprésente un atome d'halogène, ou un groupement alkyle ou alkoxy ayant de 1 à 10 atomes de carbone.

7. Procédé selon l'une des revendications 1 à 6 caractérisé en ce que le dérivé nitré est le nitrobenzène.

8. Procédé selon l'une des revendications 1 à 6 caractérisé en ce que le dérivé nitré est le dinitro-2,4 toluène.

9. Procédé selon l'une des revendications 1 à 8 caractérisé en ce que la réaction est menée en phase liquide en présence ou non d'un solvant.

10. Procédé selon l'une des revendications 1 à 9, caractérisé en ce que la solvant est l'orthodichlorobenzène.

11. Procédé selon l'une des revendications 1 à 10 caractérisé par un rapport du nombre d'atomes-grammes de métal sur le nombre de groupements nitro à transformer compris entre $10^{-4}$ et 1, préférentiellement entre $5.10^{-3}$ et $10^{-1}$.

12. Procédé selon l'une des revendications 1 à 11 caractérisé par une température de réaction comprise entre 100° et 500°C et plus particulièrement entre 150°C et 300°C.

13. Procédé selon l'une des revendications 1 à 12 caractérisé par une pression de réaction comprise entre 20 et 500 bars et préférentiellement entre 150 et 350 bars.

## Patentansprüche

1. Verfahren zur Synthese von aromatischen Isocyanaten durch Reaktion von nitrierten aromatischen Derivaten mit Kohlenmonoxid, dadurch gekennzeichnet, daß die Reaktion in Gegenward eines Katalysators durchgeführt wird, der aus einem oder mehreren Metallkomplexen der Porphyrine besteht, wobei die Metalle der Gruppe VIII und/oder $I_B$ des Periodensystems der Elemente angehören.

2. Verfahren nach Anspruche 1, dadurch gekennzeichnet, daß das oder die Porphyrine durch eine oder mehrere Alkyl-, Aryl-, Alkoxy-, Acetyl-, Nitril-, Amid-, Säurechloridgruppen oder durch ein oder mehrere Halogenatome substituiert sind.

3. Verfahren nach den Ansprüchen 1—2, dadurch gekennzeichnet, daß der Katalysator Palladium-Tetraphenylporphyrin ist.

4. Verfahren nach den Ansprüchen 1—2, dadurch gekennzeichnet, daß der Katalysator aus einem Komplex eines Porphyrins mit einem Metall der Gruppe $I_B$ und eniem Komplex eines Porphyrins mit einem Metall der Gruppe VIII des Periodensystems gebildet ist.

5. Verfahren nach einem der vorhergehenden Ansprüche, dadurch gekennzeichnet, daß der Katalysator auf einem Träger wie Aluminiumoxide, Siliciumoxide, Siliciumoxide/Aluminiumoxide, aktivierte Kohlenstoffe, Magnesiumoxid, Zirkonoxid und Siliciumcarbid abgeschieden ist.

6. Verfahren nach Anspruch 1, dadurch gekennzeichnet, daß das nitrierte aromatische Derivat folgender allgemeiner Formel enspricht

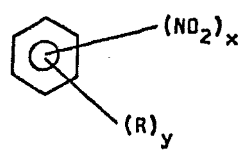

worin x=1 oder 2, y=0, 2, 3 und R ein Halogenatom oder eine Alkyl- oder Alkoxygruppe mit 1—10 Kohlenstoffatomen bedeuten.

7. Verfahren nach einem der Ansprüche 1—6 dadurch gekennzeichnet, daß das nitrierte Derivat Nitrobenzol ist.

8. Verfahren nach einem der Ansprüche 1—6, dadurch gekennzeichnet, daß das nitrierte Derivat 2.4 Dinitrotoluol ist.

9. Verfahren nach einem der Ansprüche 1—8, dadurch gekennzeichnet, daß die Reaktion in flüssiger Phase in Gegenwart oder Abwesenheit eines Lösungsmittels durchgeführt wird.

10. Verfahren nach einem der Ansprüche 1—9, dadurch gekennzeichnet, daß das Lösungsmittel o-Dichlorbenzol ist.

11. Verfahren nach einem der Ansprüche 1—10, gekennzeichnet durch ein Verhältnis der Grammatomzahl des Metalles zur Anzahl der umzuwandelnden Nitrogruppen zwischen $10^{-4}$ und 1, vorzugsweise $5 \cdot 10^{-3}$ und $10^{-1}$.

12. Verfahren nach einem der Ansprüche zwischen 1—11, gekennzeichnet durch eine Reaktionstemperatur zwischen 100 und 500°C, im besonderen zwischen 150 und 300°C.

13. Verfahren nach einem der Ansprüche 1—12, gekennzeichnet durch einen Reaktionsdruck zwischen 20 und 500 bar und vorzugsweise zwischen 150 und 350 Bar.

## Claims

1. Process for the synthesis of aromatic isocyanates by reacting aromatic nitro derivatives with carbon monoxide, characterised in that the reaction is conducted in the presence of a catalyst consisting of one or more porphyrin metallic complexes the metals of which belong to group VIII and/or $I_B$ of the peridic classification of elements.

2. Process according to claim 1 characterised in that the porphyrin or porphyrins is or are substituted by one of more alkyl, aryl, alkoxy, acetyl, nitrile, amide or acid chloride groups or by one or more halogen atoms.

3. Process according to claims 1 to 2 characterised in that the catalyst is palladium tetraphenylporphyrin.

4. Process according to claims 1 to 2 characterised in that the catalyst is an association of a porphyrin of a metal of group $I_B$ and of a porphyrin of a metal of group VIII of the periodic classification.

5. Process according to one of the preceding claims characterised in that the catalyst is deposited on a carrier such as aluminas, silicas, silica-aluminas, active carbons, magnesia, zirconia or silicon carbide.

6. Process according to claim 1 characterised in that the aromatic nitro derivative corresponds to the general formula:

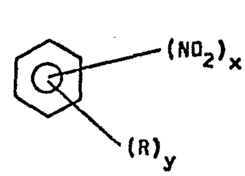

where x=1 or 2, y=0, 1, 2 or 3, and R represents a halogen atom, or an alkyl or alkoxy group having from 1 to 10 carbon atoms.

7. Process according to one of claims 1 to 6 characterised in that the nitro derivative is nitrobenzene.

8. Process according to one of claims 1 to 6 characterised in that the nitro derivative is 2,4-dinitrotoluene.

9. Process according to one of claims 1 to 8 characterised in that the reaction is conducted in liquid phase in the presence or absence of a solvent.

10. Process according to one of claims 1 to 9 characterised in that the solvent is orthodichlorobenzene.

11. Process according to one of claims 1 to 10 characterised by a ratio of the number of gram-atoms of metal to the number of nitro groups to be converted of between $10^{-4}$ and 1, preferably between $5.10^{-3}$ and $10^{-1}$.

12. Process according to one of claims 1 to 11 characterised by a reaction temperature of between 100° and 500° and more particularly between 150° and 300°C.

13. Process according to one of claims 1 to 12, characterised by a reaction pressure of between 20 and 500 bars and preferably between 150 and 350 bars.